# EUROPEAN PATENT APPLICATION

(11) **EP 1 802 162 A1**
(43) Date of publication of application: **27.06.2007**
(21) Application number: 06026223.5
(22) Date of filing: 18.12.2006
(51) Int. Cl.: H04R 1/08, H04R 1/02

(54) **microphone for electronic apparatus**

(30) Priority: 26.12.2005 JP 2005371963
(71) Applicant: SONY CORPORATION, Tokyo (JP)
(72) Inventor: Ishibashi, Hidenori, Shinagawa-ku Tokyo (JP); Tsubouchi, Shinko, Shinagawa-ku Tokyo (JP); Ohmori, Norikatsu, Shinagawa-ku Tokyo (JP)
(74) Representative: Müller - Hoffmann & Partner

(57) **Abstract**

Disclosed herein is an electronic apparatus with a microphone attached thereto, which includes: a case constituting an armor of the electronic apparatus; an opening formed to penetrate a wall part constituting the case, from an outside surface to an inside surface of the wall part; a grille closing the opening at the outside surface of the wall part; an intermediate wall member provided in the wall part; a holding body formed from a vibration damping material and mounted into the opening from the inside of the wall part; a microphone held by the holding body; and a support plate attached to an inside surface portion, in the surroundings of the opening, of the wall part and abutting on the holding body.

## Description

### CROSS REFERENCES TO RELATED APPLICATIONS

The present invention contains subject matter related to Japanese Patent Application JP 2005-371963 filed in the Japanese Patent Office on December 26, 2005, the entire contents of which being incorporated herein by reference.

### BACKGROUND OF THE INVENTION

### 1. Field of the Invention

The present invention relates to an electronic apparatus with a microphone attached thereto.

### 2. Description of the Related Art

There are electronic apparatuses, such as image pickup apparatuses, in which voice data obtained from sounds in the shooting environments is recorded on a recording medium, together with picture data obtained by shooting an object to be shot.

As this type of electronic apparatus, there has been proposed one which is provided with a plurality of microphones for recording audio signals in a plurality of channels by the so-called stereophonic sound field reproduction system (refer to, for example, Japanese Patent Laid-Open No. 2003-18543).

### SUMMARY OF THE INVENTION

In the case of providing an electronic apparatus with a microphone, the microphone is mounted to a case constituting an armor of the electronic apparatus. For making the electronic apparatus compact, it is requested to reduce the space necessary for mounting the microphone to the case.

On the other hand, when winds impinge on the portion where the microphone fronts on the outside, wind-blown sounds are generated, to be picked up by the microphone as noises. In view of this, it is demanded to restrain the pick-up of the wind-blown sounds by the microphone as noises.

Thus, there is a need to provide an electronic apparatus advantageous for restraining the noises transmitted to a microphone or microphones and obtaining favorable voice data, while achieving a compact configuration.

According to an embodiment of the present invention, there is provided an electronic apparatus with a microphone attached thereto, including: a case constituting an armor of the electronic apparatus; an opening formed to penetrate a wall part constituting the case, from an outside surface to an inside surface of the wall part; a grille closing the opening at the outside surface of the wall part; an intermediate wall member provided in the wall part so as to front on an intermediate portion in the penetration direction of the opening and to permit sounds to pass through the opening in the penetration direction; a holding body formed from a vibration damping material for damping vibrations and mounted into the opening from the inside of the wall part; a microphone held by the holding body so as to front on the outside of the wall part from the opening in the condition where the holding body is mounted in the opening; and a support plate attached to an inside surface portion, in the surroundings of the opening, of the wall part and abutting on the holding body so as to abut a portion, fronting on the intermediate wall member, of the holding body against the intermediate wall member.

According to the embodiment of the present invention, the microphone is mounted to the case by use of a simple configuration in which the holding body holding the microphone and put in the opening is held by abutting it against the intermediate wall member by the support plate from the inside surface side of the wall part, so that the number of component parts arranged in the penetration direction of the opening is small. Therefore, the space necessary for holding the microphone in the penetration direction of the opening can be markedly reduced, which is advantageous for making the electronic apparatus smaller in size.

In addition, since the space in the penetration direction of the opening for arranging the microphone can be largely reduced, the microphone arranging space in the penetration direction of the opening would not be much enlarged even when a sufficient distance is secured between the grille and the microphone. This is advantageous for restraining the pick-up of wind-blown sounds by the microphone as noises and thereby obtaining good voice data.

### BRIEF DESCRIPTION OF THE DRAWINGS

FIG. 1 is a perspective view of an image pickup apparatus according to a first embodiment of the present invention;
FIG. 2 is a perspective view of the image pickup apparatus according to the first embodiment;
FIG. 3 is a block diagram of a control system in the image pickup apparatus;
FIG. 4 is an exploded perspective view of a microphone unit of microphones;
FIG. 5 is an exploded perspective view of the microphone unit of the microphones;
FIG. 6 is a plan view of the microphone unit of the microphones;
FIG. 7 is a sectional view taken along line A-A of FIG. 6;
FIG. 8 is a sectional view taken along line B-B of Fig. 6;
FIG. 9 illustrates an accessory shoe and an open/close lid;
FIGS. 10A and 10B are perspective views of the open/close lid;
FIG. 11 is a perspective view of an elastic member;
FIG. 12 illustrates a joint part between the open/close lid and the elastic member;
FIG. 13 is a perspective view of a windscreen;
FIG. 14 illustrates the mounting of the windscreen; and
FIG. 15 illustrates the operation of the windscreen.

### DETAILED DESCRIPTION OF THE PREFERRED EMBODIMENTS

### [First Embodiment]

Now, an embodiment of the present invention will be described below referring to the drawings.

In this embodiment, the case where the electronic apparatus is an image pickup apparatus will be described.

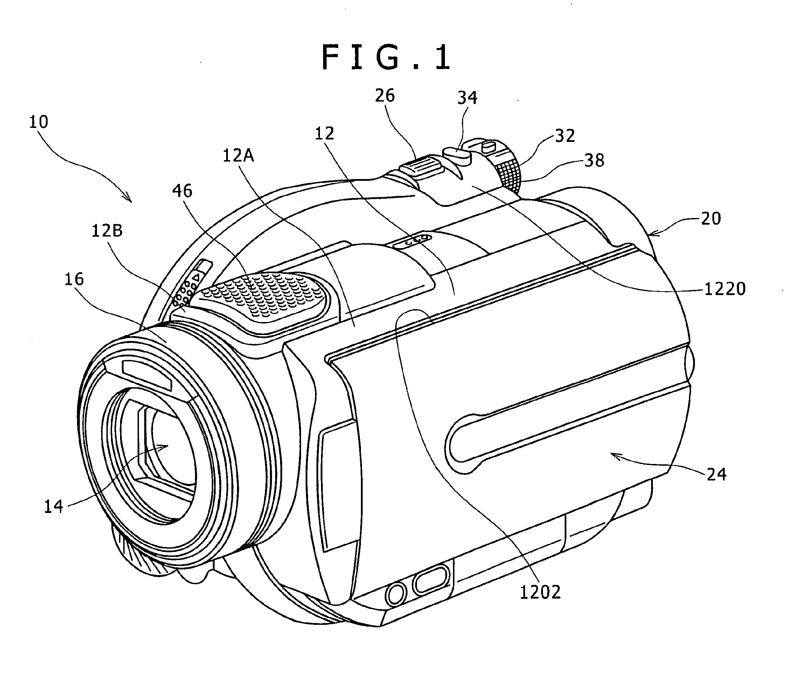

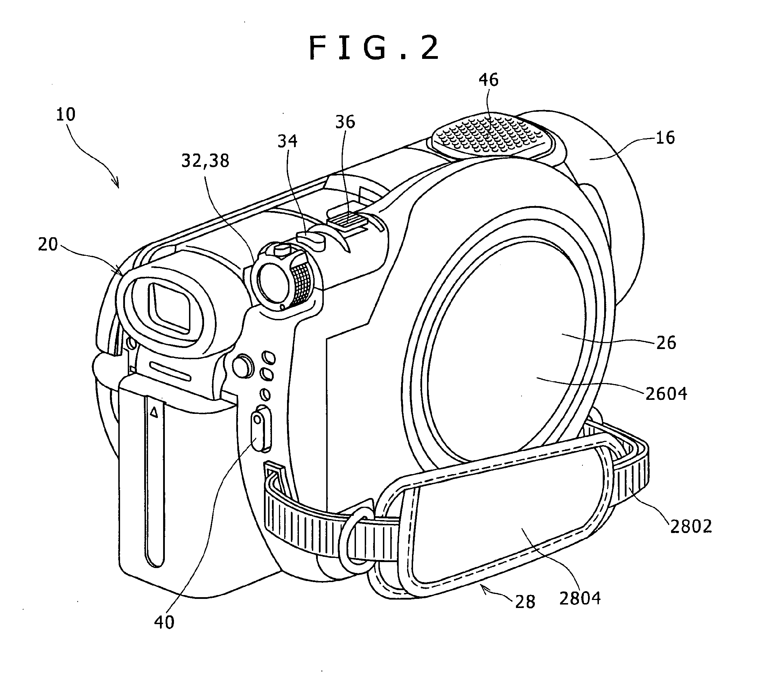

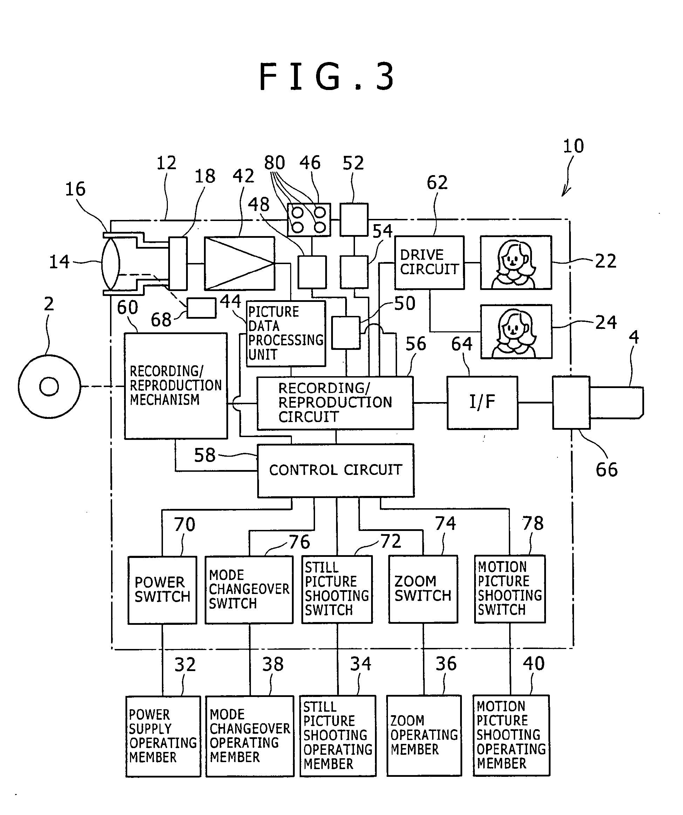

FIGS. 1 and 2 are perspective views of the image pickup apparatus 10 in the first embodiment, and FIG. 3 is a block diagram of a control system in the image pickup apparatus 10.

As shown in FIGS. 1 and 2, the image pickup apparatus 10 in this embodiment is a video camera.

A case 12 constituting an armor of the image pickup apparatus 10 has a length in the front-rear direction and a height in the vertical direction which are greater than the width in the left-right direction. Incidentally, the terms "left" and "right" herein means the left and right as viewed from the rear side of the image pickup apparatus 10, and, in the optical axis direction of the optical system, the object side will be referred to as the "front" side, while the image pickup device side will be referred to as the "rear" side.

A lens-barrel 16 with an image pickup optical system 14 mounted therein extends in the front-rear direction at a front portion of an upper portion of the case 12, and is so arranged that a front portion thereof is exposed at a front surface of the case 12. The image pickup optical system 14 has a zoom lens, the zooming ratio of which is continuously variable.

An image pickup device 18 (see FIG. 3) for picking up an object image guided through the image pickup optical system 14 is provided at the rear end of the lens-barrel 16.

As shown in FIG. 2, at a rear portion of an upper portion of the case 12, a view finder (electronic finder) 20 for visually checking an object image picked up by the image pickup device 18 is provided so as to front on the rear side from a rear surface of the case 12. The view finder 20 has a display panel 22 composed, for example, of a liquid display unit provided in the inside of the case 12 so that the image displayed on the display panel 22 is visually checked.

As shown in FIG. 1, at a left side portion of the case 1, a display panel 24 composed, for example, of a liquid crystal display unit for displaying an object image picked up by the image pickup device 18 and the like is provided to be openable and closable, and the display panel 24 when closed is accommodated in an accommodating recessed part 1202. Incidentally, a speaker 52 (see FIG. 3) is provided at a bottom wall of the accommodating recessed part 1202.

As shown in FIG. 2, at a right side part of the case 12, an accommodating part 26 for detachably accommodating therein a disk-formed recording medium 2 (see FIG. 3) for recording picture data and voice data is provided, and the accommodating part 26 is opened and closed with an open/close lid 2604.

In addition, as shown in FIG. 2, a grip belt 28 extending in the front-rear direction is provided on the right side surface of the case 12.

The grip belt 28 has a belt body 2802 connected to a front portion and a rear portion of the case 12 at both ends thereof, and a back-of-hand contact pad 2804 covering an intermediate portion of the belt body 2802.

Besides, a microphone unit 46 is provided at a front portion of the upper surface of the case 12.

As shown in FIGS. 1 and 2, the image pickup apparatus 10 is provided with operating members for effecting various functions related to shooting, such as a power supply operating member 32, a still picture shooting operating member 34, a zoom operating member 36, a mode changeover operating member 38, and a motion picture (dynamic image) shooting operating member 40.

As shown in FIG. 3, the image pickup apparatus 10 is provided with a picture signal amplifying circuit 42, a picture data processing unit 44, four microphones 80, a microphone amplifying circuit 48, a voice data processing circuit 50, a speaker 52, an output amplifying circuit 54, a recording/reproduction circuit 56, a control circuit 58, a recording/reproduction mechanism 60, a drive circuit 62, an interface circuit 64, a memory card connector 66, a zoom drive circuit 68, etc.

In addition, the image pickup apparatus 10 is provided with a power switch 70, a still picture shooting switch 72, a zoom switch 74, a mode changeover switch 76, and a motion picture shooting switch 78.

An image pickup signal produced in the image pickup device 18 is amplified by the picture signal amplifying circuit 42, before being supplied to the picture data processing unit 44.

By applying a predetermined signal processing to the image pickup signal, the picture data processing unit 44 produces motion picture data and still picture data, which are supplied to the recording/reproduction circuit 56.

The four microphones 80 are provided in the microphone unit 46, and a voice signal picked up by each of the microphones 80 is amplified by the microphone amplifying circuit 48, before being supplied to the voice data processing circuit 50.

The voice data processing circuit 50 applies a predetermined arithmetic processing to four-channel amount of audio signals outputted from the four microphones 80 to thereby produce voice data for a 5.1-channel stereophonic sound field reproduction system, and supplies the 5.1-channel voice data to the recording/reproduction circuit 56.

Here, the stereophonic sound field reproduction system will be described.

At present, as a stereophonic sound field reproduction method, there are well known the stereophonic sound field reproduction methods for reproducing sound fields in the front-rear direction and the left-right direction, such as the Dolby Surround system, the Dolby Surround Pro Logic system, the Dolby Digital system, and the digital theater systems (DTS).

A recording medium carrying recorded thereon the audio signals produced correspondingly to such a stereophonic sound field reproduction method is applied to and reproduced by a reproduction apparatus, thereby permitting the audience (or user) to enjoy realism.

In addition, in order to record the audio signals corresponding to the above-mentioned stereophonic sound field reproduction system, it may be necessary to pick up sounds coming from three or more directions by separate microphones.

In this embodiment, sounds are picked up by use of the four microphones 80 corresponding to the 5.1-channel system, which is one of the above-mentioned stereophonic sound field reproduction systems.

Incidentally, Dolby, Dolby Surround, Dolby Surround Pro Logic, and Dolby Digital are registered trademarks of Dolby Laboratories Licensing Corporation, in USA, and DTS is a registered trademark of Digital Theater Systems, Inc., in USA.

The recording/reproduction circuit 56 supplies the recording/reproduction mechanism 60 with the motion picture data and still picture data supplied from the picture data processing unit 44 and the voice data in the 5.1-channel stereophonic sound field reproduction system supplied from the voice data processing circuit 50, according to the control of the control circuit 58. The recording/reproduction mechanism 60 records the motion picture data, still picture data and voice data on a disk-formed recording medium 2 provided as a recording medium. In this embodiment, an optical disk such as DVD-R is used as the disk-formed recording medium 2; however, the disk-formed recording medium naturally may be an optical disk other than DVD-R, or may be a magnetooptical disk.

In addition, the recording/reproduction circuit 56 records the motion picture data and still picture data supplied from the picture data processing unit 44 and the voice data supplied from the voice data processing circuit 50, on a memory card 4 mounted as a recording medium in the memory card connector 66, through the interface circuit 64.

Besides, the recording/reproduction circuit 56 supplies the motion picture data and still picture data, supplied from the picture data processing unit 44, to the display panels 22 and 24 through the drive circuit 62 so as to display pictures.

Further, the recording/reproduction circuit 56 supplies motion picture data and still picture data, supplied from the memory card 4 through the interface circuit 64, to the display panels 22 and 24 through the drive circuit 62 so as to display pictures; in addition, the recording/reproduction circuit 56 supplies the voice data, supplied from the memory card 4 through the interface circuit 64, to the speakers 52 through the output amplifying circuit 54 so as to output voices (sounds).

In addition, the recording/reproduction circuit 56 supplies motion picture data and still picture data, reproduced from the disk-formed recording medium 2 by the recording/reproduction mechanism 60, to the display panels 22 and 24 through the drive circuit 62 so as to display pictures; besides, the recording/reproduction circuit 56 supplies, voice data reproduced from the disk-formed recording medium 2 by the recording/reproduction mechanism 60, to the speakers 52 through the output amplifying circuit 54 so as to output voices (sounds).

Incidentally, the recording/reproduction mechanism 60 includes a spindle motor for rotatingly driving the disk-formed recording medium 2, and a feed motor for feeding an optical pickup in the tracking direction of the disk-formed recording medium 2, and operation noises and vibrations are generated attendant on the operations of the spindle motor and the feed motor.

The power switch 70 is operated by an operation on the power supply operating member 32, and the control circuit 58 turns ON and OFF the power supply for the image pickup apparatus 10, based on the operation of the power switch 70.

The still picture shooting switch 72 is operated by an operation on the still picture shooting operating member 34, and the control circuit 58 gives commands to the picture data processing unit 44 and the recording/reproduction circuit 56 on the basis of the operation of the still picture shooting switch 72, whereby the still picture data supplied from the picture signal amplifying circuit 42 to the picture data processing unit 44 is supplied from the recording/reproduction circuit 56 to the recording/reproduction mechanism 60 so as to record the still picture data onto the disk-formed recording medium 2. In other words, the still picture shooting operating member 34 functions as the so-called shutter button.

The zoom switch 74 is operated by an operation on the zoom operating member 36, and the control circuit 58 gives a command to the zoom drive unit 68 on the basis of the operation of the zoom switch 74, whereby a zoom lens in the image pickup optical system 14 is moved, so as to vary the zoom ratio of the image pickup optical system 14.

The mode changeover switch 76 is operated by an operation on the mode changeover operating member 38, and the control circuit 58 gives a command to the picture data processing unit 44 on the basis of the operation of the mode changeover switch 76, thereby performing a changeover between a motion picture shooting mode for producing motion picture data by the picture data processing unit 44 and a still picture shooting mode for producing still picture data by the picture data processing unit 44.

Incidentally, in the motion picture shooting mode, the motion picture data produced in the picture data processing unit 44 is recorded on the disk-formed recording medium 2 or the memory card 4 through the recording/reproduction circuit 56. In the still picture shooting mode, the still picture data produced in the picture data processing unit 44 is recorded on the disk-formed recording medium 2 or the memory card 4 through the recording/reproduction circuit 56.

In short, in this embodiment, the recording and/or reproduction of the motion picture data, still picture data, and voice data is performed on both the disk-formed recording medium 2 and the memory card 4.

The motion picture shooting switch 78 is operated by an operation on the motion picture shooting operating member 40, and the control circuit 58 performs starting and stopping of recording of motion picture data on the basis of the operation of the motion picture shooting switch 78. Specifically, the control circuit 58 gives commands to the picture data processing unit 44 and the recording/reproduction circuit 56 on the basis of the operation of the motion picture shooting switch 78, whereby the motion picture data supplied from the picture signal amplifying circuit 42 to the picture data processing unit 44 is supplied from the recording/reproduction circuit 56 to the recording/reproduction mechanism 60 so as to start, or stop, the operation of recording the motion picture data onto the disk-formed recording medium 2. In other words, the motion picture shooting operating member 40 functions as a so-called shooting start/stop operating member.

Now, the microphone unit 46 will be described below.

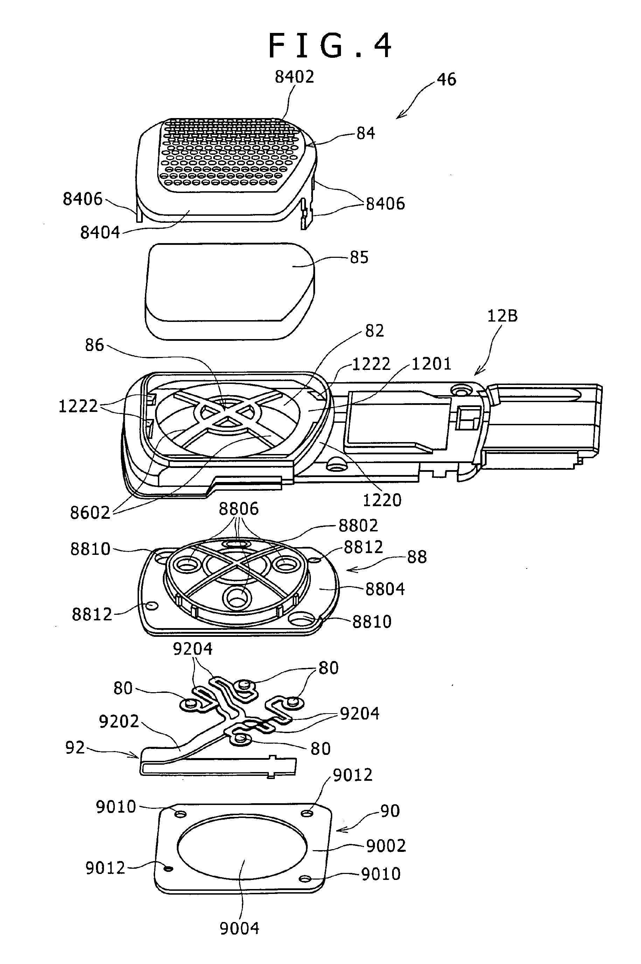

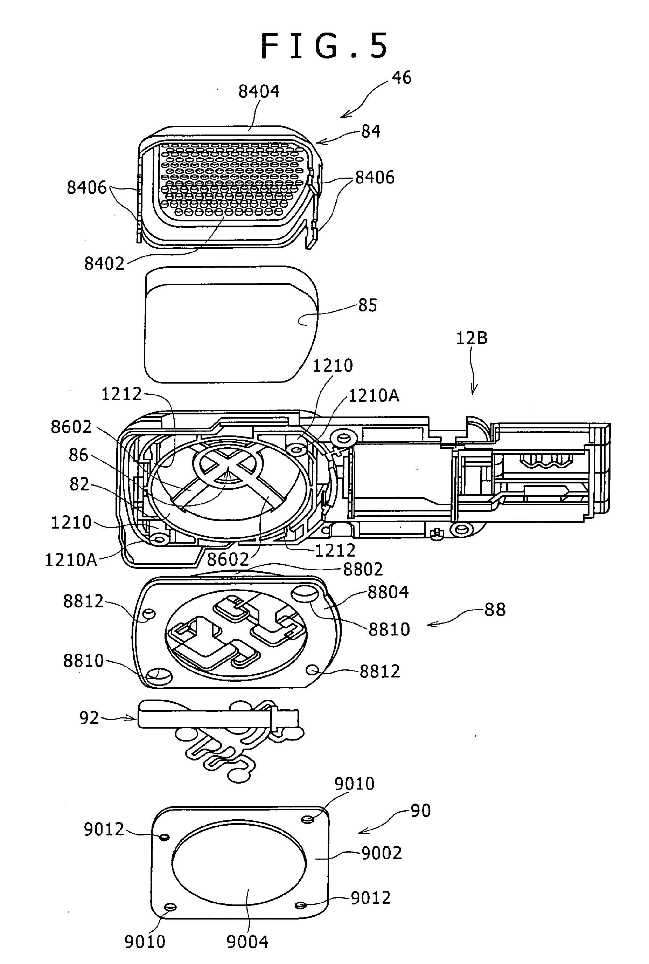

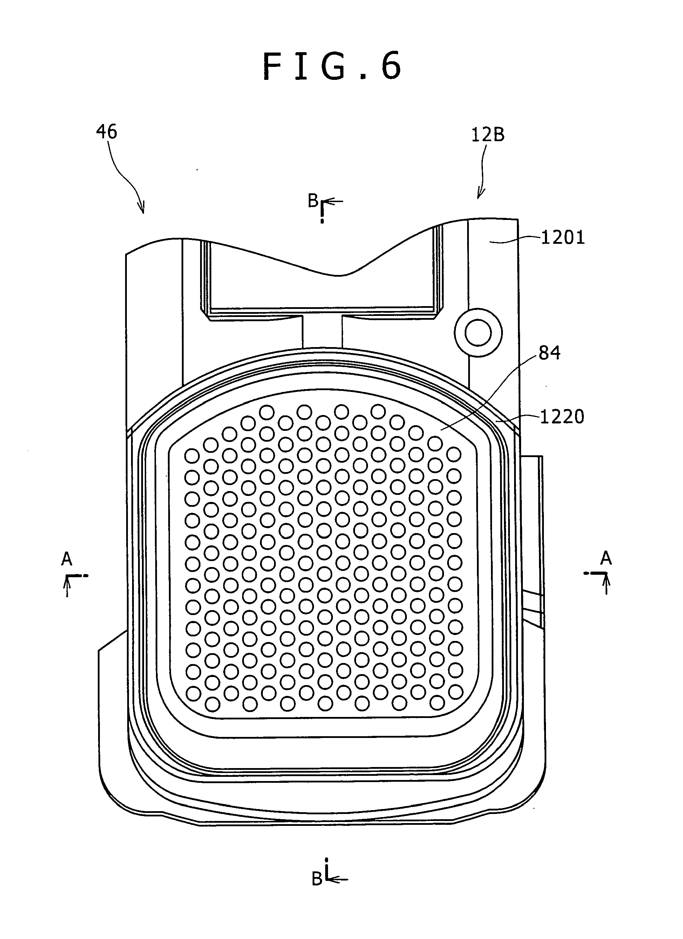

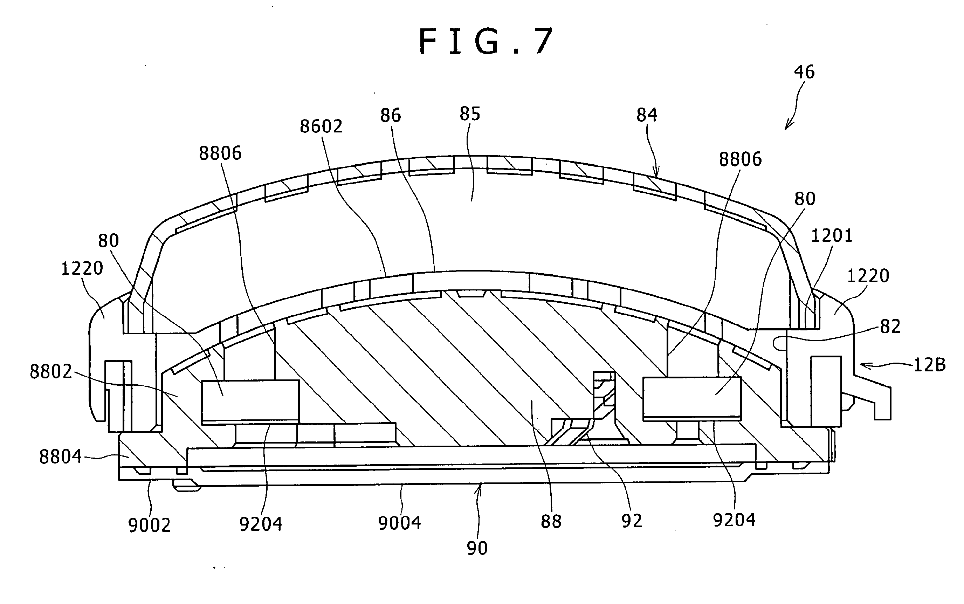

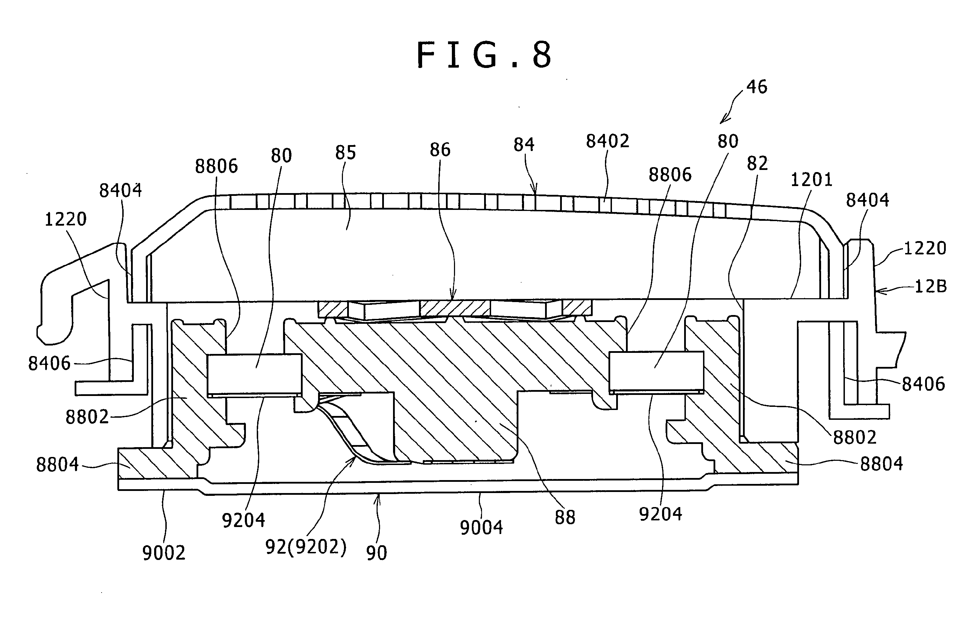

FIGS. 4 and 5 are exploded perspective views of the microphone unit 46, FIG. 6 is a plan view of the microphone unit 46, FIG. 7 is a sectional view taken along line A-A of FIG. 6, and FIG. 8 is a sectional view taken along line B-B of FIG. 6.

In this embodiment, as shown in FIG. 1, the case 12 includes a case main body 12A, and a split body 12B integrally attached to a front portion of the upper surface of the case main body 12A, and the microphone unit 46 is mounted in the split body 12B.

As shown in FIGS. 4 and 5, the microphone unit 46 includes an opening 82, a grille 84, an intermediate wall member 86, a holding body 88, the four microphones 80, a support plate 90, etc.

As shown in FIGS. 4, 5, 7 and 8, the opening 82 is formed to penetrate a wall part 1201 constituting the split body 12B (case 12) from the outside surface to the inside surface of the wall part 1201, and, in this embodiment, the opening 82 has a circular shape.

The intermediate wall member 86 is provided in a portion of the wall part 1201 so as to front on an intermediate portion in the penetration direction of the opening 82 so as to permit sounds to pass through the opening in the penetration direction.

In this embodiment, the intermediate wall member 86 includes a plurality of small-width piece elements 8602 extending in radial directions from the center of the circular shape of the opening 82.

As shown in FIG. 5, boss parts 1210 and positioning pins 1212 are provided at inside surface portions, in the surroundings of the opening 82, of the wall part 1201.

The boss parts 1210 are projectingly provided respectively at two positions located on opposite sides of the opening 82 along the diametral direction of the opening 82, and each of the boss parts 1210 is provided with a screw hole 1210A in its tip end.

The positioning pins 1212 are projectingly provided respectively at two positions located on opposite sides of the opening 82 along the diametral direction of the opening 82.

In addition, as shown in FIG. 4, a hollow cylindrical wall part 1220 greater in profile than the opening 82 is projectingly provided on the outside surface, in the surrounding of the opening 82, of the wall part 1201. The wall part 1201 is provided with lock pawl insertion grooves 1222 penetrating therethrough, at its portions on the outside of the opening and on the inside of the hollow cylindrical wall part 1220.

As shown in FIGS. 4 and 5, the grille 84 is formed from a conductive sheet material of a metal or the like, and includes an upper surface part 8402 provided with a multiplicity of minute holes, and an annular side surface part 8404 bent downwards from the periphery of the upper surface part 8402.

In this embodiment, a plurality of lock pawls 8406 is provided projectingly from the side surface part 8404.

As shown in FIG. 8, mounting of the grille 84 is so performed that the side surface part 8404 of the grille 84 is inserted into the inside of the hollow cylindrical wall part 1220, the lock pawls 8406 are inserted into the lock pawl insertion grooves 1222, and the tip ends of the lock pawls 8406 inserted in the lock pawl insertion grooves 1222 are bent at the inside surface of the wall part 1201. By the mounting of the grille 84, the opening 82 is closed at the outside surface of the wall part 1201.

Incidentally, in this embodiment, as shown in FIGS. 4 and 5, a windbreak member 85 extending inside the opening 82 over the entire region of an imaginary plane orthogonal to the penetration direction of the opening 82 and operative to suppress wind-blown sounds is interposed between the upper surface part 8402 of the grille 84 and the intermediate wall member 86. As the windbreak member 85, for example, a sponge or a non-woven fabric can be used.

The holding body 88 is formed of a vibration damping material capable of damping vibrations.

As the vibration damping material, for example, an elastic material such as elastomer and rubber can be used.

The holding body 88 is mounted into the opening 82 from the inside of the wall part 1201 of the split body 12B (case 12).

In this embodiment, as shown in FIG. 4, the holding body 88 has a cylindrical part 8802 mounted into the opening 82, and a flange part 8804 extending on the inside of the wall part 1201 to the surroundings of the opening 82 in the condition where the cylindrical part 8802 is mounted in the opening 82.

As shown in FIGS. 7 and 8, the cylindrical part 8802 when mounted in the opening 82 has an outer peripheral surface in close contact with the inner peripheral surface of the opening 82.

The holding body 88 (cylindrical part 8802) has such a thickness as to extend in the penetration direction of the opening 82, and is provided with four holes 8806 penetrating therethrough in the thickness direction, at intervals along the circumferential direction thereof.

As shown in FIG. 5, the flange part 8804 is provided with two passing holes 8810 for permitting the two boss parts 1210 to pass therethrough, and positioning holes 8812 for permitting the two positioning pins 1212 to pass therethrough.

As shown in FIG. 4, the four microphones 80 are attached to a flexible substrate 92.

The flexible substrate 92 has a main body part 9202 formed in a belt-like shape and connected at its base end to the above-mentioned microphone amplifying circuit 48, and four branch parts 9204 branched from the tip end of the main body part 9202 and extending with a smaller width than that of the main body part 9202. The microphones 80 are attached by soldering them to the tip ends of the branch parts 9204.

With the microphones 80 thus attached to the tip ends of the small-width branch parts 9204, vibrations transmitted from the flexible substrate 92 are liable to be damped, so that the vibrations reaching the microphones 80 are suppressed, which is advantageous for obtaining good voice signals.

As shown in FIGS. 7 and 8, the four microphones 80 in the state of being attached to the flexible substrate 92 are fitted in the holes 8806 in the holding body 88, and are held by the holding body 88 so as to front on the outside of the wall part 1201 from the opening 82 in the condition where the holding body 88 is mounted in the opening 82.

The support plate 90 is formed from a conductive sheet material of a metal or the like.

As shown in FIGS. 7 and 8, the support plate 90 is attached to an inside surface portion, in the surroundings of the opening 82, of the wall part 1201, and abuts on the holding body 88 to thereby abut the portion, fronting on the intermediate wall member 86, of the holding body 88 against the intermediate wall member 86.

As shown in FIGS. 4 and 5, the holding plate 90 includes an attachment piece part 9002 attached to the inside surface portion, in the surroundings of the opening 82, of the wall part 1201 and abutted on the holding body 88, and a displaceable piece part 9004 formed with a diameter smaller than the opening 82 on the inside of the attachment piece part 9002 and provided in the state of being deviated away from the grille 84 relative to the attachment piece part 9002.

As shown in FIG. 4, the attachment piece part 9002 is provided with two screw passing holes 9010 corresponding to the screw holes 1210A in the two boss parts 1210, and positioning holes 9012 in which the two positioning pins 1212 are passed.

As shown in FIGS. 7 and 8, the two boss parts 1210 are passed through passing holes 8810 in the holding body 88, the two positioning pins 1212 are passed through the positioning holes 8812 in the holding body 88. Next, the support plate 90 is laid on the holding body 88 on the inside of the wall part 1201, the positioning pins 1212 are passed through the positioning holes 9012 in the support plate 90, and the screws passed through the screw passing holes 9010 are screw-engaged into the screw holes 1210A in the boss parts 1210, whereby the support plate 90 is attached to the split body 12B through the holding body 88 therebetween.

In the condition where the support plate 90 is attached to the inside surface portion, in the surroundings of the opening 82, of the wall part 1201, the flange part 8804 is compressed between the attachment piece part 9002 of the support plate 90 and the inside portion, in the surroundings of the opening 82, of the wall part 1201.

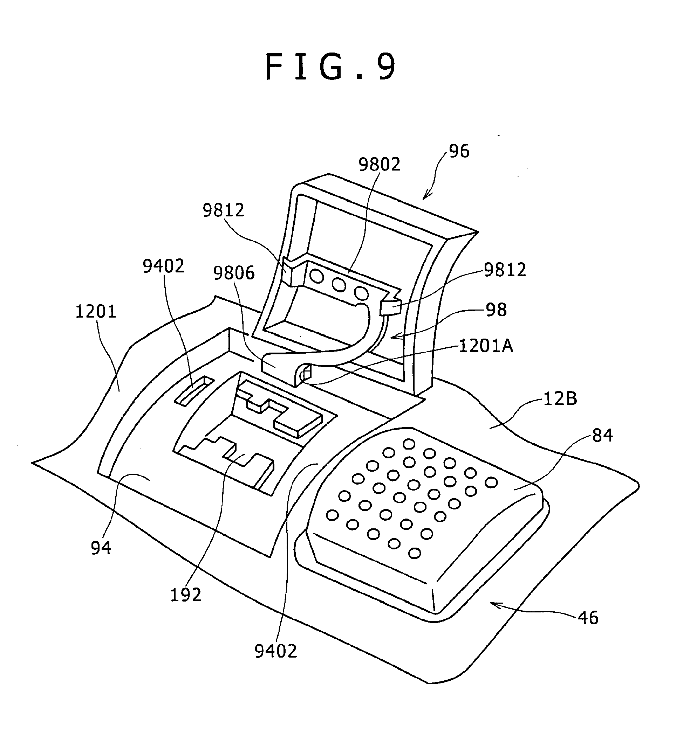

Now, an opening/closing structure of an open/close lid of an accessory shoe 192 will be described below, based on FIGS. 9 to 12.

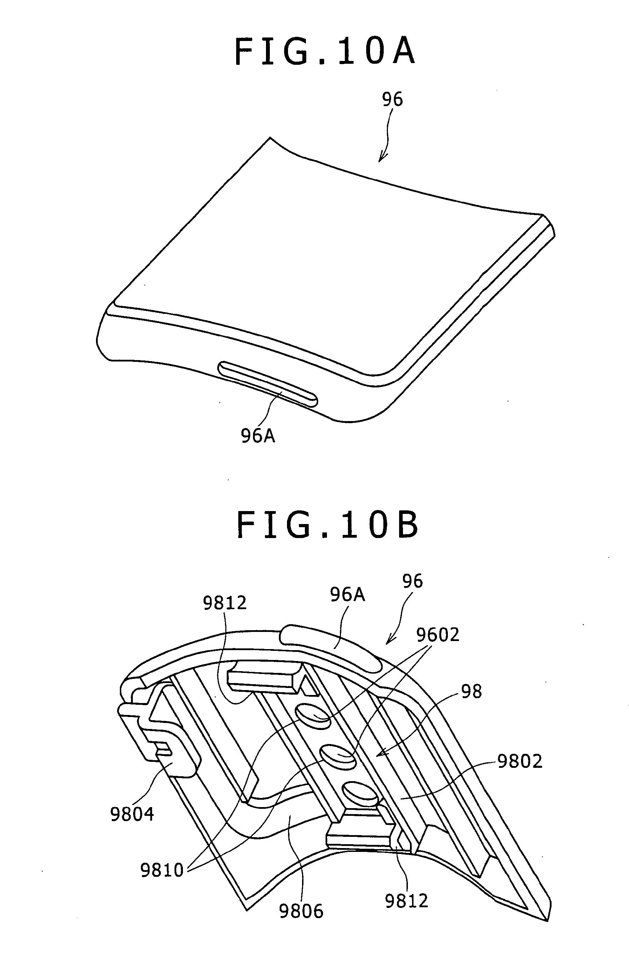

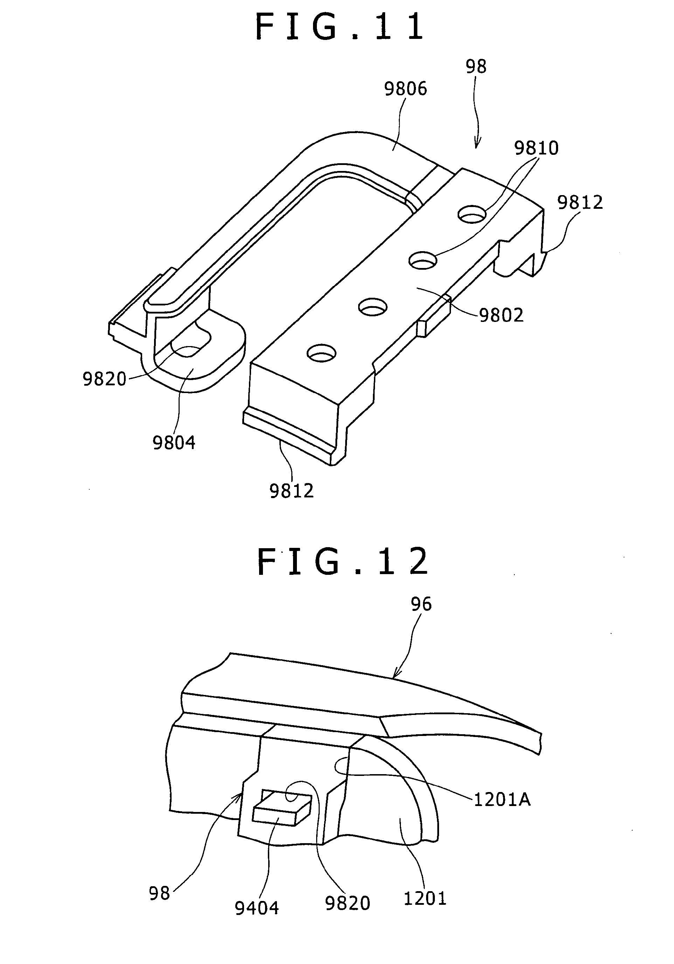

FIG. 9 illustrates the accessory shoe 192 and the open/close lid 96, FIGS. 10A and 10B are perspective views of the open/close lid 96, FIG. 11 is a perspective view of an elastic member 98, and FIG. 12 illustrates a joint part between the open/close lid 96 and the elastic member 98.

As shown in FIG. 9, the wall part 1201 of the case 12 (split body 12B) is provided with a recessed part 94 at its portion on the rear side of the microphone unit 46, and the accessory shoe 192 for engagement and disengagement of accessories (a video light, a flash light, etc.) is provided in the recessed part 94.

The recessed part 94 is opened and closed with the open/close lid 96, and the open/close lid 96 and the wall part 1201 are joined to each other by the elastic member 98 which is flexible.

Incidentally, symbol 96A in FIGS. 10A and 10B denotes a finger hook part for opening and closing operations on the open/close lid 96.

As shown in FIGS. 10A, 10B and 11, the elastic member 98 includes a first attachment part 9802 attached to the back surface of the open/close lid 96, a second attachment part 9804 attached to the inside surface of the wall part 1201, and a belt-like part 9806 connecting the attachment parts 9802 and 9804 to each other.

As the material of the elastic member 98, for example, an elastomer such as polypropylene can be used.

As shown in FIG. 10B, the first attachment part 9802 is plate-like in shape, is provided with a plurality of attachment holes 9810, and a plurality of projected parts 9602 provided on the back side of the open/close lid 96 are fitted into the attachment holes 9810, whereby the first attachment part 9802 is attached to the back surface of the open/close lid 96.

As shown in FIGS. 9 and 11, the first attachment part 9802 is provided, at both ends in the extending direction thereof, with lock pawls 9812 detachably coupled to lock grooves 9402 of the recessed part 94 in the condition where the recessed part 94 is closed with the open/close lid 96. When the recessed part 94 is closed, the lock pawls 9812 are coupled to the lock grooves 9402, whereby the condition of closing the recessed part 94 with the open/close lid 96 is maintained.

As shown in FIG. 11, the second attachment part 9804 is plate-like in shape, and is provided with a rectangular hole 9820 in its central portion. As shown in FIGS. 9 and 12, the second attachment part 9804 is attached to the inside surface of the wall part 120 when the belt-like part 9806 near the second attachment part 9804 is passed through a cutout 1201A in the wall part 1201 and disposed on the inside surface of the wall part 1201 and a lock wall 9404 provided at an inside surface portion of the wall part 1201 in the surroundings of the recessed part 94 is fitted in the hole 9820.

As shown in FIG. 9, the belt-like part 9806 is small in width and extends in a sheet form in the left-right direction of the image pickup apparatus 10; therefore, the open/close lid 96 is moved, for opening or closing the recessed part 94, in the left-right direction.

At the times of opening and closing of the open/close lid 96, the belt-like part 9806 is appropriately deformed so that the open/close lid 96 can be opened and closed without any trouble.

With such an opening/closing structure of the open/close lid 96, for example in the condition where an accessory is mounted to the accessory shoe 192, the open/close lid 96 is constantly kept in springy contact with the accessory by the elasticity of the elastic member 98, which is advantageous for preventing the swinging of the open/close lid 96, and the attendant collision noises, in use of the accessory shoe 192.

In addition, in the condition where the recessed part 94 is left open, the open/close lid 96 is retracted sideways in the left-right direction, so that it does not hamper the pickup of sounds by the microphones 80.

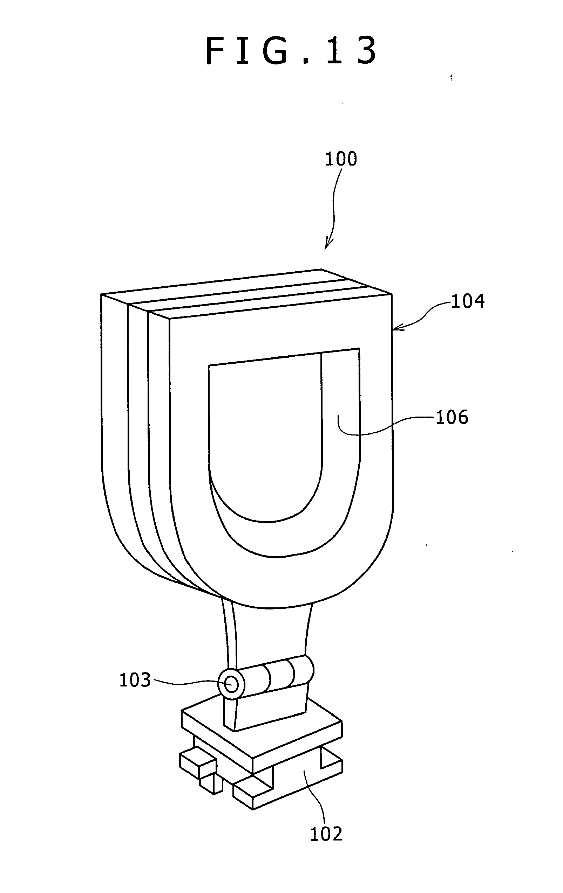

Now, a windscreen 100 will be described below referring to FIGS. 13 to 15.

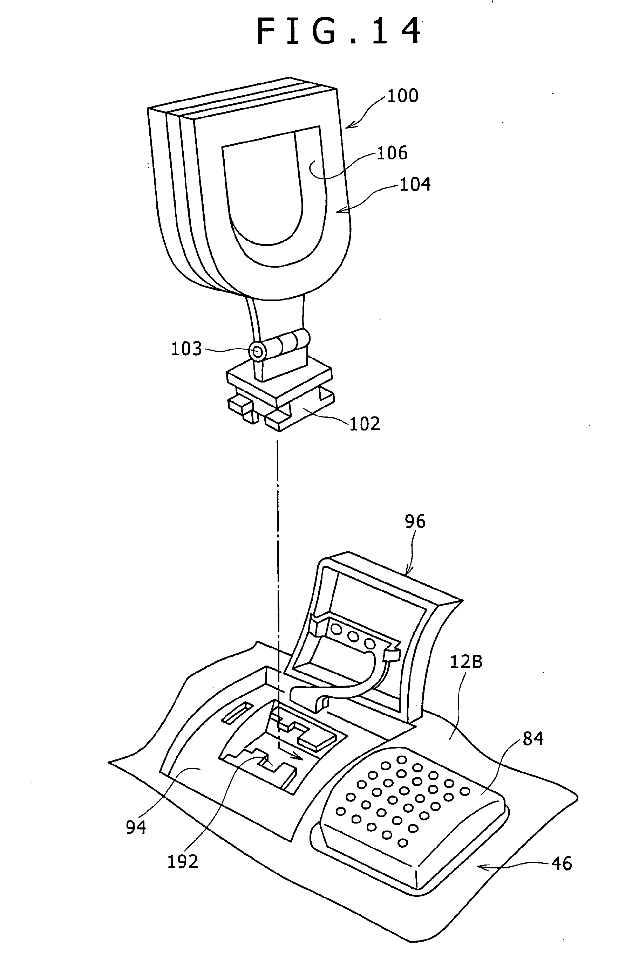

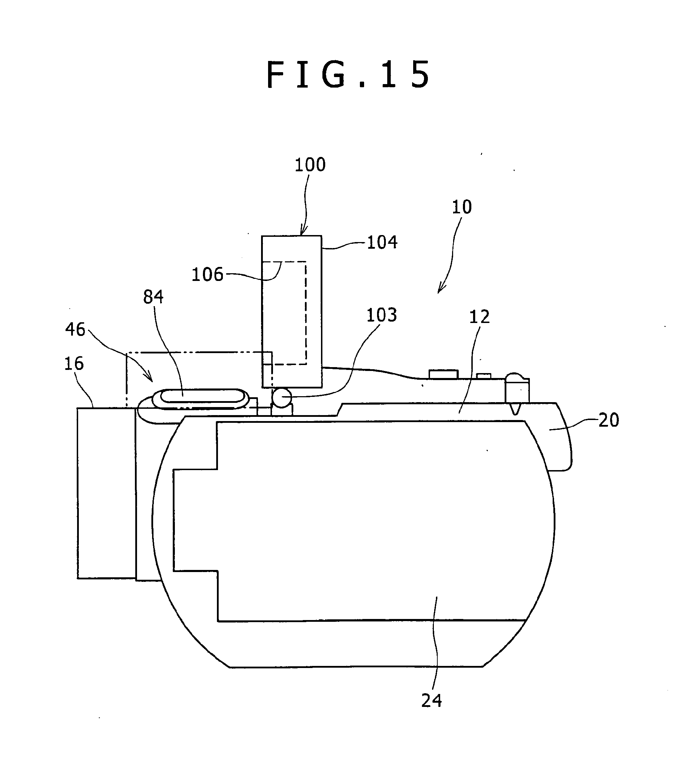

FIG. 13 is a perspective view of the windscreen 100, FIG. 14 illustrates the mounting of the windscreen 100, and FIG. 15 illustrates the operation of the windscreen 100.

The windscreen 100 is for enhancing the windbreak function for the microphones 80.

As shown in FIGS. 13 and 14, the windscreen 100 includes a base part 102 engageable to and disengageable from the accessory shoe 192, and a windscreen body 104 connected to the upper end of the base part 102 through a hinge 103.

The windscreen body 104 is formed from a sponge having a predetermined thickness, and is provided on its one side with an accommodating recessed part 106 capable of accommodating the grille 84.

As shown in FIG. 15, in the condition where the base part 102 is connected to the accessory shoe 192, the windscreen body 104 is disposed at an upper surface portion of the case 12 on the rear side of the microphones 80 in such a state as to be swingable to the front side. When the windscreen body 104 is tilted to the front side, the grille 84 is accommodated in the accommodating recessed part 106, and the grille 84 is covered with the windscreen body 104.

With such a windscreen 100 used, the windscreen body 104 can be tilted to the front side to cover the grille 84 when the wind is high, whereby the windbreak performance is enhanced, and the pickup of windblown sounds by the microphones 80 can be effectively prevented.

Particularly in the case of picking up sounds by use of the four microphones 80 correspondingly to the 5.1-channel system, which is one of the stereophonic sound field reproduction systems, as in this embodiment, it may be necessary to pick up sounds at low pitches, so that there is a need to suppress the low-pitch noises such as windblown sounds. Therefore, with the windbreak performance enhanced by the windscreen 100, the pickup of windblown sounds as noises by the microphones 80 is restrained, which is advantageous for obtaining good voice data.

According to the present embodiment, the microphones 80 are mounted to the split body 12B (case 12) by the simple configuration in which the holding body 88 holding the microphones 80 and mounted in the opening 82 is held by abutting it against the intermediate wall member 86 by the support plate 90 from the inside of the wall part 1201. This ensures that the number of component parts arranged in the penetration direction of the opening 82 is small, and, therefore, the necessary space to hold the microphones 80 in the penetration direction of the opening 82 can be largely reduced, which is advantageous for making the electronic apparatus smaller in size.

In addition, in order to suppress the transmission to the microphones 80 of the windblown sounds generated by collision of winds on the grille 84 where the microphones 80 front on the outside, it may be necessary to secure a sufficient distance between the grille 84 and the microphones 80.

In this embodiment, it is possible to markedly reduce the space in the penetration direction of the opening 82 which is necessary for arranging the microphones 80 as above-mentioned, the space for arranging the microphones 80 in the penetration direction of the opening 82 is not much enlarged even when a sufficient distance is secured between the grille 84 and the microphones 80, which is advantageous for suppressing the pickup of windblown sounds as noises by the microphones 80 and for obtaining good voice data.

Particularly in the case of picking up sounds by use of the four microphones 80 correspondingly to the 5.1-channel system, which is one of the stereophonic sound field reproduction systems, as in this embodiment, there is a need to pick up sounds at low pitches. Therefore, this embodiment is especially advantageous for suppressing low-pitch noises such as windblown sounds.

Besides, in this embodiment, as above-mentioned, operating sounds and vibrations are generated in the inside of the case 12 attendant on the operations of the spindle motor and the feed motor in the recording/reproduction mechanism 60. The vibrations are transmitted through the case 12, and the operating sounds are transmitted through the space inside the case 12.

In this embodiment, however, the flange part 8804 of the holding body 88 with the support plate 90 attached thereto is compressed between the attachment piece part 9002 of the support plate 90 and the inside surface portion, in the surroundings of the opening 82, of the wall part 1201, so that no gap is generated between the attachment piece part 9002 of the support plate 90 and the inside surface portion, in the surroundings of the opening 82, of the wall part 1201. Therefore, this configuration is advantageous for suppressing the operating sounds reaching the microphones 80 and for obtaining good sound signals.

In addition, since the microphones 80 are held by the holding body 88 formed from a vibration damping material, so that vibrations are damped by the holding body 88. Therefore, this configuration is advantageous to suppress the vibrations reaching the microphones 80 and for obtaining good sound signals.

Besides, in this embodiment, the displaceable piece part 9004 constituting a central part of the support plate 90 is separate from the lower surface of the holding body 88, and a gap is secured between the displaceable piece part 9004 and the holding body 88. Therefore, the operating sounds generated in the inside of the case 12 are suppressed by the gap, which is advantageous for obtaining good sound signals.

Incidentally, while the case where four microphones 80 are provided and voice data for 5.1-channel system are recorded on a recording medium has been described in this embodiment, the number of microphones may be one, or may be two or more, and the format of voice data recorded on the recording medium is not particularly limited.

In addition, while the case of applying the present invention to a video camera has been described in this embodiment, the present invention is not limited to this. For example, the present invention naturally is applicable also to image pickup apparatuses such as digital still camera, cellular phones with a camera incorporated therein, recording apparatuses other than image pickup apparatuses, and apparatuses with such a recording apparatus incorporated therein.

Besides, while the case where an optical disk as a disk-formed recording medium and a memory card are used as recording media has been described in this embodiment, the recording medium is not limited to these. For example, a magnetic tape as a tape-formed recording medium, a detachable hard disk drive, a hard disk drive incorporated in the case 12, and a semiconductor memory may also be used.

Furthermore, while the case where the image pickup apparatus 10 performs both recording and reproduction of motion picture data and still picture data has been described above, the image pickup apparatus may be one that performs only recording of motion picture data and still picture data.

It should be understood by those skilled in the art that various modifications, combinations, subcombinations and alterations may occur depending on design requirements and other factor in so far as they are within the scope of the appended claims or the equivalents thereof.

## Claims

1. An electronic apparatus with a microphone attached thereto, comprising:
a case constituting an armor of said electronic apparatus;
an opening formed to penetrate a wall part constituting said case, from an outside surface to an inside surface of said wall part;
a grille closing said opening at said outside surface of said wall part;
an intermediate wall member provided in said wall part so as to front on an intermediate portion in said penetration direction of said opening and to permit sounds to pass through said opening in said penetration direction;
a holding body formed from a vibration damping material for damping vibrations and mounted into said opening from the inside of said wall part;
a microphone held by said holding body so as to front on the outside of said wall part from said opening in the condition where said holding body is mounted in said opening; and
a support plate attached to an inside surface portion, in the surroundings of said opening, of said wall part and abutting on said holding body so as to abut a portion, fronting on said intermediate wall member, of said holding body against said intermediate wall member.

2. The electronic apparatus as set forth in claim 1, wherein said opening has a circular shape, and said intermediate wall member includes a plurality of small-width piece elements extending in radial directions from the center of said circular shape.

3. The electronic apparatus as set forth in claim 1, wherein said opening has a circular shape, said holding body is cylindrical in shape, and an inner peripheral surface of said opening and an outer peripheral surface of said holding body are in close contact with each other.

4. The electronic apparatus as set forth in claim 1, wherein said opening has a circular shape; said holding body has a cylindrical part mounted into said opening, and a flange part extending on the inside of said case to the surroundings of said opening in the condition where said cylindrical part is mounted in said opening; and said flange part is compressed between said support plate and an inside surface portion, in the surroundings of said opening, of said wall part in the condition where said support plate is attached to said inside surface portion, in the surroundings of said opening, of said wall part.

5. The electronic apparatus as set forth in claim 1, wherein said holding body has such a thickness as to extend in said penetration direction of said opening, said holding body is provided with a hole penetrating said holding body in said thickness direction, and said microphone is disposed in the state of being fitted in said hole.

6. The electronic apparatus as set forth in claim 1, wherein said support plate includes an attachment piece part attached to said inside surface portion, in the surroundings of said opening, of said wall part on the inside of said case and abutted on said holding body, and a displaceable piece part formed with a diameter smaller than said opening on the inside of said attachment piece part and provided in the state of being deviated away from said grille relative to said attachment piece part.

7. The electronic apparatus as set forth in claim 1, wherein said case includes a case main body, and a case split body attached to said case main body; and a portion, provided with said opening and said intermediate wall member, of said case includes said case split body.

8. The electronic apparatus as set forth in claim 1, wherein a windbreak member extending inside said opening over the entire region of an imaginary plane orthogonal to said penetration direction of said opening and operative to suppress wind-blown sounds is disposed between said grille and said intermediate wall member.

9. The electronic apparatus as set forth in claim 1, wherein a plurality of said microphones are held by said holding body at intervals along the circumferential direction of said opening.
